# EUROPEAN PATENT APPLICATION

(11) **EP 1 746 754 A1**
(43) Date of publication of application: **24.01.2007**
(21) Application number: 05291546.9
(22) Date of filing: 19.07.2005
(51) Int. Cl.: H04J 14/02, H04B 10/18

(54) **Method for operating a switched optical network**

(71) Applicant: ALCATEL, 75008 Paris (FR)
(72) Inventor: Bülow, Henning, 70806 Kornwestheim (DE)
(74) Representative: Kohler Schmid Möbus

(57) **Abstract**

A method for operating a switched optical network, in particular an automatically switched optical network (=ASON), wherein the method allocates a transparent physical path out of a multitude of candidate paths to an optical data signal, is characterized in that the method takes into account the polarisation mode dispersion (=PMD) on each candidate path, wherein the PMD of the candidate paths is determined for each wavelength channel individually, taking into account the wavelength (λ) dependence of the PMD. The method allows the operation of the ASON with high reliability of the data transmission and increased data transfer capacity and the exploitation of the network resources.

## Description

### Background of the invention

The invention relates to a method for operating a switched optical network, in particular an automatically switched optical network (=ASON), wherein the method allocates a transparent physical path out of a multitude of candidate paths to an optical data signal.

Such a method is described in WO 03/079596.

To transport and route a high volume of data over large distances, optical networks are used. These optical networks typically comprise numerous nodes and fibers, wherein each node is typically connected to several other nodes by said fibers. When an optical data signal is to be transported from a first node to a second node, there are usually several physical paths that can be used. A physical path is characterized by the used nodes and fibers and their sequence, as well as by the range of the wavelengths λ of the optical data signal (further referred to as "channel"). Modern optical networks are switched to accommodate new requests for connections or to re-route the traffic in the case of a failure in parts of the network. Switching means that an optical data signal is allocated to a physical path taking into account certain constraints such as the traffic on the network, the quality of service, but also constraints in the physical (transmission) layer such as chromatic dispersion of the transmission fiber.

Another important constraint in the physical layer is polarization mode dispersion (=PMD). When the actual PMD value at the signal wavelength on a physical path exceeds a critical level, the signal is severely distorted and hence data transported on this physical path is lost. An allocation is performed by a so-called control plane. If a statistical mean value of a PMD estimate for a physical path exceeds the critical level, the likelihood for a strong distortion is too high (often 10⁻⁵) and the optical data signals are not allocated to that physical path.

In the state of the art, such as WO 03/079596, the control plane estimates the PMD for all wavelength channels running over the same fibers in common, and PMD is typically described by its statistical mean value of its first order effect, i.e. the differential group delay (=DGD). In more detail, for a piece of fiber of the optical network, a mean DGD value (often referred to as mean PMD) is determined by adding the root of the added squares of the mean DGDs of all fibers in the transparent path before operation of the network. The same DGD value is used for all wavelength channels. For a physical path comprising many pieces of fiber, the outage is estimated based on Maxwellian PMD statistics.

However, this conventional approach is rather imprecise. Physical paths with sufficiently low outage are barred, and on the other hand, physical paths released for use have a too high outage. When for reasons of reliability of the transmission the margin allocated for PMD is increased, network capacity is wasted.

### Object of the invention

It is therefore the object of the invention to present a method for operating a switched optical data network which has a high availability at an increased data transfer capacity.

### Short description of the invention

This object is achieved, in accordance with the invention, by a method as mentioned in the beginning characterized in that the method takes into account the polarisation mode dispersion (=PMD) on each candidate path, wherein the PMD of the candidate paths is determined for each wavelength channel individually, taking into account the wavelength (λ) dependence of the PMD. By considering the wavelength dependence of the PMD, the estimate for an outage of a physical path with a certain channel becomes much more exact and reliable. Compared to conventional processing, wrong estimates are much less likely to occur. Much less physical paths are blocked without need, and much less physical paths are released for use wrongfully. As a result, the optical network becomes much more efficient.

In a preferred variant of said method, PMD on each candidate path is approximated by a differential group delay (=DGD) on the candidate path. This simplifies the PMD estimate. DGD is the first order fraction of PMD.

An advantageous variant of the inventive method is characterized in that each candidate path comprises of one or more sections, in particular a number of sections for which the DGD statistics (which is strongly correlated with the system outage statistics) significantly deviates from the Maxwellian statistics at system relevant low probabilities, i.e. approx. 10⁻⁵, and further in particular less than 50 sections, and that the PMD of a candidate path is determined by a calculation based upon the characteristics of the sections of the candidate path. When an optical signal propagates along a physical path, it passes through sections such as pieces of fiber, and the sections are connected by joints such as transparent cross connects, transparent switches, transparent optical add-drop-multiplexer (OADM), or only optical amplifiers having no routing functionality. Often the temporal variation of the optical transfer characteristics, i.e. dominantly PMD for the sections and only polarisation transfer function for the joints, of at least the sections is much slower than for the joints. Then in the case of a few sections estimates taking into account these few sections are enough to estimate the substantial characteristics of a physical path in such a way, that the network can be operated with lower PMD margin and thus the network resources can better be exploited. This means, the PMD estimate is more precise, in particular compared to conventional procedures using an infinite section model such a the Maxwellian statistics. If needed, the one or more joints comprised in the candidate path and connecting the sections may be taken into account, too, and PMD on a candidate path is then determined by a calculation also based upon the characteristics of the joints of the candidate path.

A highly preferred further development of this variant is characterized in that for each section of a candidate path, a link-DGD of the section is calculated or estimated for each wavelength channel individually, taking into account its wavelength λ, and that for a candidate path, its outage caused by polarization mode dispersion is calculated using the link-DGDs(λ) of the sections of the candidate path, wherein the method simulates each candidate path as sections of optical birefringement optical elements (=OBOEs) and joints of polarization controllers in between. When for each section, a wavelength-dependent link-DGD is used, the outage estimate for a complete physical path becomes even more accurate. The outage is associated with the probability that a specific high value of the path DGD is exceeded. Typical values might be in the order of 10⁻⁵ which corresponds to the often demanded 99.999% availability of network elements.

This inventive further development can be further developed such that the OBOEs are assumed to substantially change its link-DGD(λ) over the course of months only, and the polarization controllers are assumed to substantially change its transformation characteristic within hours or less. OBOEs typically have their real counterpart in optical fibers buried in the earth, so that only few temperature changes affect these fibers. Joints connect two or more sections. Real counterparts can be optical cross connects, routers, amplifiers and the like. They are typically located above ground, and are subject to temperature changes, mechanical vibrations and the like, varying within hours. These assumptions reflect the true network characteristics very accurately.

The inventive further development can also be further developed such that for calculating a link-DGD(λ) of a section, at least one total path DGD(λ) of a monitored total path is determined, wherein the monitored total path comprises said section. In other words, a link-DGD(λ) of a section is determined with the aid of one or more measurements of a DGD(λ) of a total path. A total path is a path comprising one or more sections, starting at a transport interface transmitter, and ending at a performance monitor, which measures the DGD(λ) of said path. From the DGD behaviour of the at least one total path, it is concluded how a single section which is part of the path behaves. The more total path measurements are available, the more reliable the conclusion about the link-DGD(λ) of the section will be.

In further development of this last variant of the inventive method, the total path DGD(λ) is determined with wanted transferred data signals during regular operation of the network. Then the DGD data can be broadened and/or updated without blocking or crowding the optical network with test signals. However, alternatively, or if there is too few data available, test signals may be used in accordance with the invention.

A further preferred variant of the inventive method is characterized in that for allocating the transparent path for an optical data signal, traffic on the network and/or chromatic dispersion on the network and/or quality of service of the optical data signal is taken into account. This optimises the data flow within the optical network, in particular with respect to the connection requests of the network users.

Also within the scope of the invention is a switched optical network, in particular an automatically switched optical data network (ASON), characterized in that it is suitable for performing the inventive method as described above. The optical network has an improved data transfer capacity.

In a highly preferred embodiment of this inventive switched optical network, it comprises performance monitors for determining total path DGDs(λ) of monitored total paths within the network. Performance monitors are typically installed at transport interface receivers, but additional performance monitors may be distributed throughout the network. The performance monitors provide the necessary data for determining total path DGDs(λ), and, finally, for determining link-DGDs(λ) of sections and/or transfer characteristics of joints.

In a preferred further development of this variant, the performance monitors comprise wavelength scanning polarimeters and/or optical PMD compensators and/or electronic equalizers, in particular Viterbi equalizers. This equipment has been found to be particularly useful since the equalizers or compensators can often be extended to have the monitor functionality with moderate additional effort.

An advantageous embodiment of the inventive switched optical data network is characterized in that at least part of the network comprises optical fibers mostly or completely buried in the earth. Then the link-DGD(λ) of sections is particularly easy to estimate.

In a further advantageous embodiment, the switched optical data network has a data transfer rate of at least 10 Gbit/s, in particular 40Gbit/s. Then the gain in data transfer capacity is particularly of interest.

Further advantages can be extracted from the description and the enclosed drawing. The features mentioned above and below can be used in accordance with the invention either individually or collectively in any combination. The embodiments mentioned are not to be understood as exhaustive enumeration but rather have exemplary character for the description of the invention.

### Drawing

The invention is shown in the drawing.
- Fig. 1: shows schematically an automatically switched optical network in accordance with the invention;
- Fig. 2: shows an example of sections and joints in a real switched optical network in accordance with the invention;

- Fig. 3a: shows a diagram plotting the frequency of occurrence of DGD values calculated by Maxwellian statistics and few section theory statistics for a typical physical path, wherein Maxwellian theory overestimates the outage probability;
- Fig. 3b: shows a diagram plotting the frequency of occurrence of DGD values calculated by Maxwellian statistics and few section theory statistics for a typical physical path, wherein Maxwellian theory underestimates the outage probability.

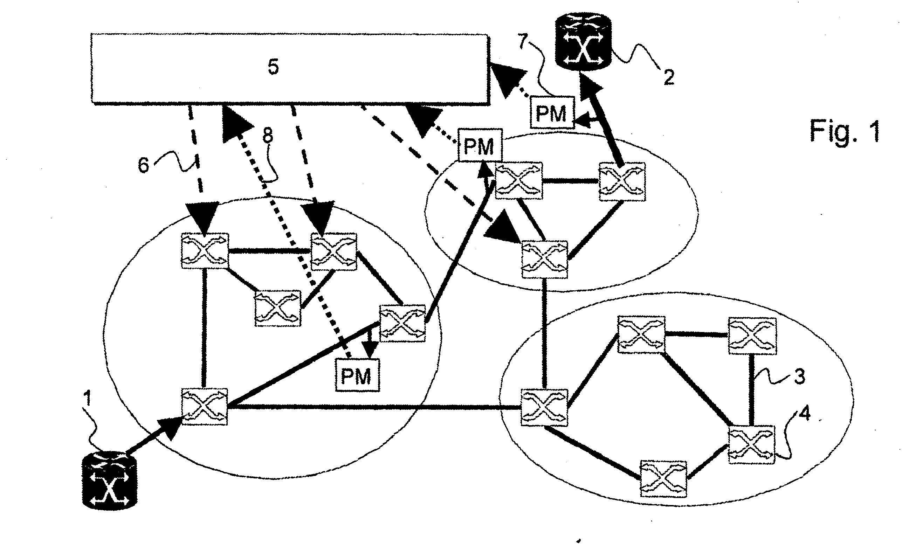

**Fig. 1** shows a switched optical network in accordance with the invention. It comprises a transport interface transmitter 1, from which an optical signal is sent into the network. At a transport interface receiver 2, the optical signal is detected and analyzed. The network may comprise further transport interface transmitters and receivers, which are not shown in Fig. 1 for the viewer's convenience. The network comprises numerous optical fiber parts or sections 3, which are connected by joints 4 such as optical cross connects.

The optical signal can be transported through the optical network via a huge number of combinations of sections 3 and joints 4, and the optical signal can be sent on different wavelength channels. A combination of sections 3, joints 4 and a wavelength channel for an optical signal to be transported describes a physical path for said optical signal, and each possible combination leading the optical signal to its destination describes a candidate path.

However, not all candidate paths are equally suited for the data transfer. On some candidate paths, PMD may be too strong, so that the induced signal distortion is too high and hence the bit error-rate of the signal after detection becomes also prohibitive high. It is the function of a control plane 5 to allocate a transparent physical path to an optical signal to be transported on the optical network. For this purpose, the control plane 5 may switch the joints 4, as indicated exemplarily with arrows 6. The control plane may also select the wavelength λ, i.e. the wavelength channel, for the optical signal.

In order to determine a transparent physical path for an optical signal, the control plane 5 acts as follows, in accordance with the invention:
First of all, the control plane 5 gathers information from performance monitors 7. The data flow from the performance monitors 7 to the control plane 5 is indicated with dotted arrows 8. Performance monitors 7 are installed throughout the optical network, in particular at the transport interface receivers 2. The performance monitors 7 determine the DGD of a total path, in particular of a physical path of an optical signal received at the transport interface receiver 2. But they can also determine the DGD of a signal from the transport interface transmitter up to the position where the performance monitor is located in the optical network, if it is located along the physical path at least a section before the transport interface receiver. This DGD value is determined as a function of the wavelength λ. The received optical signals may be test signals or, preferably, regular signals in use for data transport.
Second, based on the gathered information, individual link-DGD values for the sections 3 of the optical network are calculated or estimated. These link-DGDs are determined as a function of the wavelength λ. In other words, for each section 3 of the optical network, the DGD behavior at each wavelength channel is determined. If desired, the polarization transfer characteristics of the joints 4 may also be determined, again as a function of λ.
Third, the outage of candidate paths is calculated, taking into account the link-DGDs (λ) of the sections 3 contained in the candidate path. If desired, the polarization transfer characteristics of the joints 4 contained in the candidate path may be taken into account, too. Candidate paths with a too high outage probability are excluded.
Fourth, the control plane 5 allocates one of the candidate paths to the optical signal. The allocated candidate path must be transparent, i.e. it has not been excluded in the previous third step. When choosing from several transparent candidate paths, other constraints of the data transport may be taken into account.
Realization forms of optical or electronic performance monitors (PMs) 7 which allow measuring the actual signal PMD resp. DGD are, for example:
   - a wavelength scanning polarimeter, scanning all channels and determining DGD(λ),
   - an optical PMD compensator which already has information on DGD(λ) of one or more channels in its control software, or
   - an electric equalizer already used for detection which also provides the DGD information (such as a Viterbi equaliser, also referred to as Maximum Likelihood Sequence Detector MLSD), or a dedicated equalizer scanning the wavelength.
In a terrestrial optical network, the fiber parts are commonly buried in the earth and thus are isolated from environmental temperature changes. Hence their link-DGD varies with wavelength, but it is stable for time spans of months and more. In contrast, in central offices or amplifier housings, the optical fiber and other relevant equipment of the optical network is exposed to environmental temperature changes and mechanical vibration. These changes occur within hours or even faster and affect the DGD characteristic.

In accordance with the invention, the PMD of a physical path can be described with a few sections theory. The buried fiber links or sections behave like optical birefringement optical elements (=OBOEs), such as a polarization maintaining fiber (=PMF). The DGD(λ) of a PMF can be considered as constant over months, and therefore information updates may be dispensed with for months (but need not). The OBOEs are linked by joints of polarization controllers. Their transformation characteristics change within hours or even minutes, and regular updates about their behavior are advisable, or preferably their behaviour are taken into account by statistical means.

The optical network is simulated with a few section theory, wherein the sections are OBOEs, and joints connected by the sections are polarization controllers. The number of required sections is small, corresponding to the complexity of the optical network, i.e. its number of fiber links and fiber connections. For calculating or estimating total path DGDs(λ) and/or link-DGDs(λ), it is sufficient to update the PMD behavior of the joints regularly, using data only from the last few hours or even only last few minutes, or it is possible to avoid updating of the PMD behavior of the joints and to consider their polarization transformation function as equally probable for every possible value. The PMD behavior data update of the OBOEs is only necessary every few weeks or even months. Alternatively, an update can be done more often, but the wavelength dependent DGD (or other higher order PMD parameters) or also statistical values (e.g. mean value for each wavelength) extracted from these measurements can be considered as constant within these time spans.

The inventive method allows the operation of an ASON with high reliability of the data transmission and increased data transfer capacity and the exploitation of the network resources.

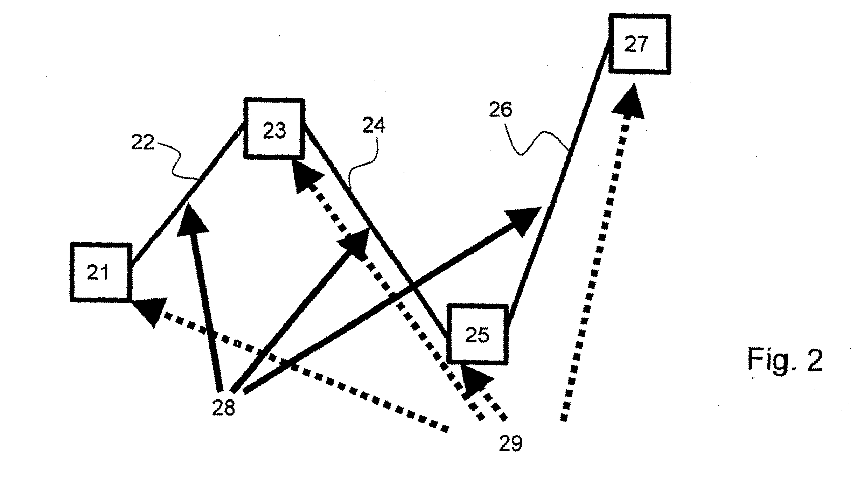

**Fig. 2** shows, as an example, schematically a routing of an optical signal on a real physical path. The optical signal starts at a first central office 21, where it might have been introduced to the optical network by a transport interface transmitter. Then it travels through a first buried optical fiber link 22, a second central office 23, a second buried fiber link 24, a third central office 25, and a third buried fiber link 26. Finally, it reaches a forth central office 27, where it may be detected by a transport interface receiver. The PMD behavior on that route can be simulated by three sections of OBOEs, corresponding to the fiber sections 22, 24, 26, and four joints of polarization controllers connecting and terminating the sections, wherein the polarization controllers correspond to the central offices 21, 23, 25, 27. Arrows 28 indicate the sections with a DGD variation with time spans on the order of months, as a result of the isolation from environmental temperature changes such as seasonal changes. Arrows 29 indicate joints, with a change of the polarization transformation characteristic within time spans on the order of hours, due to their exposure to environmental temperature changes and/or mechanical vibrations.

With this few section simulation, when calculating the behavior of a candidate path, the DGD statistics and thus the outage statistics are different to the conventional statistics with a Maxwellian DGD distribution model. For some wavelengths, high DGD values might not be reached, and for other wavelengths, high DGDs are very likely, even though conventional theory predicts differently.

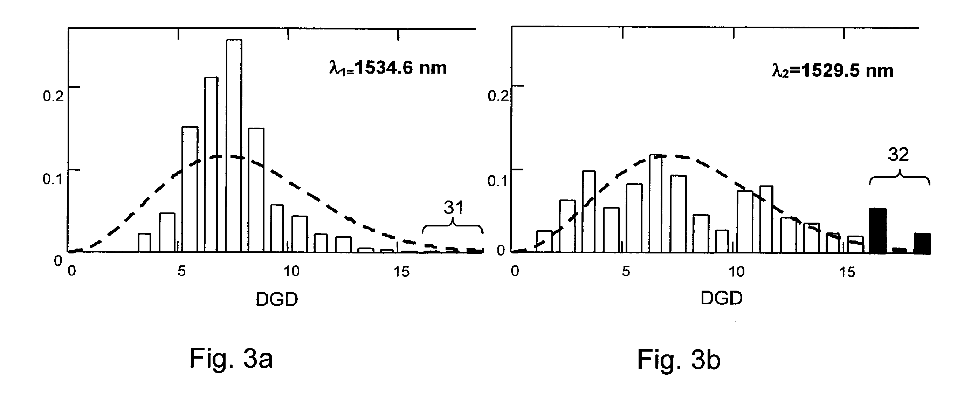

Figs. 3a, 3b illustrate this in an example. **Fig. 3a** shows a histogram of DGD values for a first wavelength λ1, as calculated by the inventive few sections theory. DGD values in picoseconds are plotted against their frequency of occurrence in fractions of 1. For comparison, a dashed line indicates frequency of occurrence values according to conventional theory, i.e. Maxwellian statistics. Above 16 ps of DGD, indicated with bracket 31, DGD is intolerable. When the accumulated probability for DGD of 16 ps or more is above a critical level, the physical path resp. the channel should be blocked. In the example of Fig. 3a, the dashed curve is above the upper limits of the histogram bars at values of bracket 31. This means that conventional statistics overestimates the outage probability. As a result, λ1 may be blocked without need when applying conventional theory, what is not the case when applying the inventive few section theory.

In **Fig. 3b**, at a lower wavelength λ2, the situation is different. In the area of intolerable DGD values as indicated with bracket 32, the upper limits of the histogram bars are above the dashed curve of conventional statistics, i.e. Maxwellian theory. This means that conventional statistics underestimate the outage probability in this case. As a result, λ2 may be released for use despite a high likelihood of data loss when applying conventional theory. In contrast, the inventive few section theory predicts a high outage probability with good accuracy.

Due to the inaccuracy of conventional theory, safety margins must be increased in conventional theory. In order to be sure that no or only few opaque physical paths are released for use, candidate paths with a medium outage probability must be blocked already. This means a lot of physical paths and channels are blocked without need in conventional theory. In contrast, the few segments theory is more accurate, and only few physical paths and channels need to be blocked. This increases the data transfer capacity of the inventive switched optical network.

## Claims

1. Method for operating a switched optical network, in particular an automatically switched optical network (=ASON),
wherein the method allocates a transparent physical path out of a multitude of candidate paths to an optical data signal,
**characterized in that**
the method takes into account the polarisation mode dispersion (=PMD) on each candidate path,
wherein the PMD of the candidate paths is determined for each
wavelength channel individually, taking into account the wavelength (λ) dependence of the PMD.

2. Method according to claim 1, **characterized in that** PMD on each candidate path is approximated by a differential group delay (=DGD) on the candidate path.

3. Method according to claim 1, **characterized in that** each candidate path comprises of one or more sections (3), in particular less than 50 sections, and that the PMD of a candidate path is determined by a calculation based upon the characteristics of the sections (3) of the candidate path.

4. Method according to claim 3, **characterized in that**
for each section (3) of a candidate path, a link-DGD of the section (3) is calculated or estimated for each wavelength channel individually, taking into account its wavelength λ,
and that for a candidate path, its outage caused by polarization mode dispersion is calculated using the link-DGDs(λ) of the sections (3) of the candidate path,
wherein the method simulates each candidate path as sections (3) of optical birefringement optical elements (=OBOEs) and joints (4) of polarization controllers in between.

5. Method according to claim 4, **characterized in that** the OBOEs are assumed to substantially change its link-DGD(λ) over the course of months only, and the polarization controllers are assumed to substantially change its transformation characteristic within hours or less.

6. Method according to claim 4, **characterized in that** for calculating a link-DGD(λ) of a section (3), at least one total path DGD(λ) of a monitored total path is determined, wherein the monitored total path comprises said section (3).

7. Method according to claim 6, **characterized in that** the total path DGD(λ) is determined with wanted transferred data signals during regular operation of the network.

8. Method according to claim 1, **characterized in that** for allocating the transparent path for an optical data signal, traffic on the network and/or chromatic dispersion on the network and/or quality of service of the optical data signal is taken into account.

9. A switched optical network, in particular an automatically switched optical data network (ASON), **characterized in that** it is suitable for performing the method according to claim 1.

10. A switched optical network according to claim 9, **characterized in that** it comprises performance monitors (7) for determining total path DGDs(λ) of monitored total paths within the network.

## Amended claims

### Amended claims in accordance with Rule 86(2) EPC.

**1.** Method for operating a switched optical network, in particular an automatically switched optical network, hereinafter ASON,
wherein the method allocates a transparent physical path out of a multitude of candidate paths to an optical data signal,
wherein the method takes into account the polarisation mode dispersion, hereinafter PMD, on each candidate path,
wherein before allocating a transparent physical path, the PMD of the candidate paths is determined for each wavelength channel individually, taking into account the wavelength λ dependence of the PMD,
wherein each candidate path comprises one or more sections (3), and the PMD of a candidate path is determined by a calculation based upon the characteristics of the sections (3) of the candidate path,
**characterized in that**
for each section (3) of a candidate path, a link-DGD of the section (3) is calculated or estimated for each wavelength channel individually, taking into account its wavelength λ,
that for calculating a link-DGD as a function of λ of a section (3), at least one total path DGD as a function of λ of a monitored total path is determined, wherein the monitored total path comprises said section (3), that several total paths are measured,
and that for a candidate path, its outage caused by polarization mode dispersion is calculated using the link-DGDs as a function of λ of the sections (3) of the candidate path,
wherein the method simulates each candidate path as sections (3) of optical birefringement optical elements, hereinafter OBOEs, and joints (4) of polarization controllers in between.

**2.** Method according to claim 1, **characterized in that** PMD on each candidate path is approximated by a differential group delay, hereinafter DGD, on the candidate path.

**3.** Method according to claim 1, **characterized in that** each candidate path comprises less than 50 sections.

**4.** Method according to claim 1, **characterized in that** the OBOEs are assumed to substantially change its link-DGD as a function of λ over the course of months only, and the polarization controllers are assumed to substantially change its transformation characteristic within hours or less.

**5.** Method according to claim 1, **characterized in that** the total path DGD as a function of λ is determined with wanted transferred data signals during regular operation of the network.

**6.** Method according to claim 1, **characterized in that** for allocating the transparent path for an optical data signal, traffic on the network and/or chromatic dispersion on the network and/or quality of service of the optical data signal is taken into account.

**7.** A switched optical network, in particular an automatically switched optical data network, **characterized in that** it is suitable for performing the method according to claim 1.

**8.** A switched optical network according to claim 7, **characterized in that** it comprises performance monitors (7) for determining total path DGDs as a function of λ of monitored total paths within the network.

**9.** A switched optical network according to claim 8, **characterized in that** performance monitors (7) are installed both at transport interface receivers (2) and at least one section before transport interface receivers (2).
